# EUROPEAN PATENT APPLICATION

(11) **EP 3 428 230 A1**
(43) Date of publication of application: **16.01.2019**
(21) Application number: 17763438.3
(22) Date of filing: 10.03.2017
(51) Int. Cl.: C08L 27/18, B32B 27/30, C08L 23/08, H01B 3/44, H01B 7/02

(54) **FLUORORESIN COMPOSITION, MOLDING MATERIAL, AND MOLDED OBJECT**

(30) Priority: 11.03.2016 JP 2016048759; 28.04.2016 JP 2016091850; 16.09.2016 JP 2016182183
(71) Applicant: AGC INC., Chiyoda-ku, Tokyo 1008405 (JP)
(72) Inventor: YASUDA Satoko, Tokyo 100-8405 (JP); NAGAI Hiroki, Tokyo 100-8405 (JP); NISHI Eiichi, Tokyo 100-8405 (JP); SASAKI Toru, Tokyo 100-8405 (JP)
(74) Representative: Müller-Boré & Partner Patentanwälte PartG mbB
(86) International application number: PCT/JP2017/009774
(87) International publication number: WO 2017/155106

(57) **Abstract**

To provide a fluororesin composition which is excellent in flexibility and oil resistance, is less susceptible to heat discoloration and is excellent in moldability. The fluororesin composition is made of a melt-kneaded product comprising a fluorinated elastomer having a storage shear modulus G' of at least 100 and a melt-moldable fluororesin having a melting point of at least 150°C, wherein the fluorinated elastomer is dispersed in the fluororesin, the content of the fluorinated elastomer is from 10 to 65 mass% to the total of the fluorinated elastomer and the fluororesin, and the total amount of the fluorinated elastomer and the fluororesin is at least 90 mass% to the fluororesin composition, and the storage modulus E' of the fluororesin composition at a temperature higher by 25°C than the melting point of the fluororesin is at most 250 kPa.

## Description

### TECHNICAL FIELD

The present invention relates to a fluororesin composition, a molding material and a molded product.

### BACKGROUND ART

A fluorinated elastomer such as a tetrafluoroethylene/propylene copolymer (hereinafter referred to also as "TFE/P copolymer") is excellent in properties such as heat resistance, oil resistance, chemical resistance, electrical insulating properties, flexibility, etc. and is used, as a radiation-crosslinkable elastomeric material, for hoses, tubes, gaskets, packings, diaphragms, films or sheets, a wire covering material, etc.

Further, in order to supplement the properties of a fluorinated elastomer, it is common to blend the fluorinated elastomer with a fluororesin such as an ethylene/tetrafluoroethylene copolymer (hereinafter referred to also as "E/TFE copolymer").

For example, in Patent Document 1, TFE/P copolymer and E/TFE copolymer are blended in order to improve the mechanical properties such as tensile strength, tear strength, etc. and the properties such as toughness, etc. And, in Patent Document 1, for the purpose of reducing the compound price, an ethylene-acrylic acid ester copolymer or an ethylene-vinyl acetate copolymer is further blended in a large amount, in addition to TFE/P copolymer and E/TFE copolymer.

In Patent Document 2, in order to improve the cut-through property (hardly thermosoftenable property at a high temperature) of TFE/P copolymer, together with TFE/P copolymer and calcium carbonate, E/TFE copolymer is blended.

Also in Patent Document 3, in order to improve the cut-through property, TFE/P copolymer and E/TFE copolymer are blended. And, in Patent Document 3, the blend amount of E/TFE copolymer to the entire blend polymer is set to be at most 40 mass%, since if E/TFE copolymer to be blended with TFE/P copolymer is too much, the flexibility and elongation tend to be lowered.

### PRIOR ART DOCUMENTS

### PATENT DOCUMENTS

Patent Document 1: JP-A-H5-78539
Patent Document 2: JP-A-H10-334738
Patent Document 3: JP-A-2010-186585

### DISCLOSURE OF INVENTION

### TECHNICAL PROBLEM

For example, the material used for an automobile engine room harness is required to have excellent flexibility to secure the degree of freedom of wiring harness. However, as pointed out in Patent Document 3, in order to secure flexibility by suppressing a decrease in flexibility and elongation, it was necessary to lower the proportion of E/TFE copolymer to be blended with TFE/P copolymer. However, if the ratio of the content of the fluororesin to the fluorinated elastomer was lowered, there was a case where oil resistance against lubricating oil such as automatic transmission oil tended to be insufficient.

Further, if the fluorinated elastomer and the fluororesin were blended, there was a case where heat discoloration took place under heating, thereby narrowing the degree of freedom for coloration of a molded product. Further, in a case where moldability was not sufficient, there was a case where a defect due to defective molding such as a weld line was likely to result in the molded product.

The present invention has been made in view of the above circumstances, and has an object to provide a fluororesin composition which is excellent in moldability and capable of forming a molded product excellent in flexibility and oil resistance and less susceptible to heat discoloration.

Further, the present invention also has an object to provide a molding material and a molded product, using such a fluororesin composition.

### SOLUTION TO PROBLEM

The present invention has the following construction.
[1] A fluororesin composition made of a melt-kneaded product comprising a fluorinated elastomer having a storage shear modulus G' of at least 100, and a melt-moldable fluororesin having a melting point of at least 150°C, characterized in that
   the fluorinated elastomer is dispersed in the fluororesin,
   the content of the fluorinated elastomer to the total of the fluorinated elastomer and the fluororesin is from 10 to 65 mass%,
   the total amount of the fluorinated elastomer and the fluororesin is at least 90 mass% to the fluororesin composition, and
   the storage modulus E' of the fluororesin composition at a temperature higher by 25°C than the melting point of the fluororesin, is at most 250 kPa.
[2] The fluororesin composition according to [1], wherein the fluororesin composition is made of a melt-kneaded product comprising an ethylene copolymer derived from an ethylene copolymer having epoxy groups, the fluorinated elastomer and the fluororesin, and the content of the ethylene copolymer is from 0.1 to 10 parts by mass to 100 parts by mass of the total of the fluorinated elastomer and the fluororesin.
[3] The fluororesin composition according to [1] or [2], wherein the fluorinated elastomer is a copolymer having units based on tetrafluoroethylene and units based on propylene.
[4] The fluororesin composition according to any one of [1] to [3], wherein the fluorinated elastomer is dispersed in the fluororesin by forming a sea-island structure or a co-continuous structure.
[5] The fluororesin composition according to any one of [1] to [4], wherein the fluororesin is a polymer having units based on tetrafluoroethylene, a polymer having units based on vinylidene fluoride, or a polymer having units based on chlorotrifluoroethylene.
[6] The fluororesin composition according to [5], wherein the fluororesin is a copolymer having units based on ethylene and units based on tetrafluoroethylene.
[7] The fluororesin composition according to any one of [1] to [6], wherein the melting point of the fluororesin is from 150 to 300°C.
[8] A method for producing a fluororesin composition, which comprises melt-kneading a raw material comprising a fluorinated elastomer having a storage shear modulus G' of at least 100, a melt-moldable fluororesin having a melting point of at least 150°C and optionally an ethylene copolymer having epoxy groups, followed by cooling, characterized in that
   in the raw material before the melt-kneading, the content of the fluorinated elastomer to the total of the fluorinated elastomer and the fluororesin is from 10 to 65 mass%, the total amount of the fluorinated elastomer and the fluororesin is at least 90 mass% to the fluororesin composition, and the content of the ethylene copolymer having epoxy groups is from 0 to 10 parts by mass to 100 parts by mass of the total of the fluorinated elastomer and the fluororesin, and
   after the melt-kneading, the fluorinated elastomer is dispersed in the fluororesin, and the storage modulus E' of the obtained fluororesin composition at a temperature higher by 25°C than the melting point of the fluororesin, is at most 250 kPa.
[9] The method for producing a fluororesin composition according to [8], wherein the fluorinated elastomer is dispersed in the fluororesin so as to form a sea-island structure or a co-continuous structure.
[10] A molding material comprising the fluororesin composition as defined in any one of [1] to [7].
[11] A molded product formed by melt-molding the molding material as defined in [10].
[12] A molded product made of a film, sheet, hose or tube of a single layer or multilayer structure, wherein at least one layer among layers in such a molded product is a layer formed by melt-molding the molding material as defined in [10].
[13] A covered electric wire comprising a conductor and a covering material, wherein the covering material is a covering material formed by melt-molding the molding material as defined in [10].

### ADVANTAGEOUS EFFECTS OF INVENTION

The fluororesin composition of the present invention is excellent in flexibility and oil resistance, less susceptible to heat discoloration and excellent in moldability.

The molded product of the present invention is excellent in flexibility and oil resistance and less susceptible to heat discoloration and has less defect due to molding defect.

### DESCRIPTION OF EMBODIMENTS

### [Fluororesin composition]

The fluororesin composition of the present invention is made of a melt-kneaded product comprising a specific fluorinated elastomer and a specific fluororesin. The melt-kneaded product is meant for one which has been cooled to room temperature after melt-kneading.

The specific fluorinated elastomer is meant for a "fluorinated elastomer having a storage shear modulus G' of at least 100" and will be hereinafter referred to also as "component A". The specific fluororesin is meant for "a melt-moldable fluororesin having a melting point of at least 150°C" and will be hereinafter referred to also as "component B".

The fluororesin composition of the present invention is useful as a molding material to obtain films, hoses, covered electric wires and other molded products.

Hereinafter, the fluororesin composition of the present invention will be referred to also as "the present composition".

The present composition is a melt-kneaded product obtained by melt-kneading raw materials. The raw materials are the above-mentioned specific fluorinated elastomer and the above-mentioned specific fluororesin, and it is considered that such raw materials will not change in the melt-kneading process, and therefore, the raw materials before the melt-kneading may also be referred to as component A and component B, respectively. Here, with respect to later-described component C as an optional component, its raw material changes in the melt-kneading process, and therefore, the raw material and component C in the melt-kneaded product are considered to be different.

The content of component A to the total of component A and component B in the present composition is from 10 to 65 mass%. The above content of component A in the present composition is preferably from 10 to 60 mass%, more preferably from 20 to 60 mass%, further preferably from 30 to 55 mass%.

When component A is contained within the above range in the present composition, a molded product having excellent flexibility is obtainable. When component B is contained within the above range in the present compositions, a molded product having excellent oil resistance is obtainable.

The total content of component A and component B in the present composition is at least 90 mass% to the present composition. The total content of component A and component B in the present composition is preferably from 90 to 100 mass%, more preferably from 95 to 99.7 mass%, further preferably from 97 to 99.5 mass%, to the present composition.

When the proportion of the total content of component A and component B occupying the mass of the present composition, is at least the above lower limit value, the effects of the present invention can be obtained sufficiently, and when it is at most the above upper limit value, it is possible to incorporate other components in order to change the nature of the present composition.

Further, component A is dispersed in component B, and the storage elastic modulus E' of the present composition at a temperature higher by 25°C than the melting point of component B is at most 250 kPa.

Component A being dispersed in component B means that component A and component B are phase-separated. Even if component A and component B had been compatibilized in a uniform molten state in the melt-kneading process, it is believed that the phase separation occurs in the course of cooling. In a case where component A and component B are incompatible in the melt-kneading process, it is considered that in the melt-kneading process, component A is dispersed in a fine structure in component B.

Component A is preferably dispersed in component B so as to form a sea-island structure (spherical) or co-continuous structure (Gyroid).

In the present invention, a sea-island structure means a structure in such a state that discontinuous portions (component A in the present invention) are present as mixed in a relatively continuously-observed portion (component B in the present invention), and means that the maximum width of the respective blocks of discontinuous portions is about 70 µm.

In the present invention, a co-continuous structure means such a state that the respective blocks of discontinuous portions in the sea-island structure are partially bonded to have a continuous structure wherein they are continuously connected with the maximum width being at most 50 µm.

The storage modulus E' of the present composition is a storage modulus at a temperature higher by 25°C than the melting point of the component B, at the time of conducting a viscoelasticity measurement by using the following test specimen in an air atmosphere at a frequency: 10 Hz at a heating initiation temperature: 23°C and at a temperature raising rate: 3°C/min.

### (Test specimen)

A sheet cut out to have a length of 45 mm, a width of 8 mm and a thickness of 1 mm, from a sheet having a thickness of 1 mm, formed by press molding.

The storage modulus E' of the present composition is at most 250 kPa, preferably from 0 to 200 kPa, more preferably from 0 to 150 kPa, further preferably from 0 to 130 kPa.

When the storage modulus E' of the present composition is within the above range, it is possible to secure sufficient fluidity during molding, the moldability will be excellent, and the molded product comprising the present composition will be excellent in surface smoothness.

### (Fluorinated elastomer)

In the present invention, the fluorinated elastomer as component A exhibits a storage shear modulus G' of at least 100.

The storage shear modulus G' of a fluorinated elastomer is G' at 50 cpm at the time of measuring the torque in accordance with ASTM D6204, using Rubber Process Analyzer (RPA2000, manufactured by Alpha Technology Co., Ltd.) by changing the frequency from 1 to 2,000 cpm in a sample amount: 7.5 g at a temperature: 100°C with a displacement: 0.5° and calculating G' and G" from the measured values.

The storage shear modulus G' of the fluorinated elastomer is at least 100, preferably from 150 to 1,000, more preferably from 200 to 800, further preferably from 220 to 600.

When the storage shear modulus G' of the fluorinated elastomer is at least the above lower limit value, the mechanical strength of the molded product will be good. When the storage shear modulus G' is at most the above upper limit value, it has a high fluidity, its dispersion in component B becomes good, and it is possible to improve the flexibility of the molded product.

The fluorinated elastomer as component A may be any elastic copolymer (elastomer) having no melting point, which contains fluorine and exhibits a storage shear modulus G' of at least 100.

The fluorine content in the fluorinated elastomer is preferably from 50 to 74 mass%, more preferably from 55 to 70 mass%. The fluorine content in the fluorinated elastomer is specifically preferably from 57 to 60 mass% in TFE/P-containing copolymer as described later, preferably from 66 to 71 mass% in HFP/VdF-containing copolymer as described later, or preferably from 66 to 70 mass% in TFE/PMVE-containing copolymer as described later.

When the fluorine content in the fluorinated elastomer is at least the above lower limit value, it is possible to obtain a molded body having excellent heat resistance and chemical resistance. When the fluorine content in the fluorinated elastomer is at most the above upper limit value, it is possible to increase the flexibility of the molded product.

The fluorine content of the fluorinated elastomer can be obtained by an analysis of the fluorine content and represents the proportion of the mass of fluorine atoms to the total mass of all atoms constituting the fluorinated elastomer.

The number average molecular weight of the fluorinated elastomer is preferably from 10,000 to 1,500,000, more preferably from 20,000 to 1,000,000, further preferably from 20,000 to 800,000, particularly preferably from 50,000 to 600,000. When the number average molecular weight of the fluorinated elastomer is at least the above lower limit value, the mechanical strength of the molded product will be good. When the number average molecular weight of the fluorinated elastomer is at most the above upper limit value, it has a high fluidity, and its dispersion in component B becomes good, and it is possible to increase the flexibility of the molded product.

The number average molecular weight of the fluorinated elastomer is a value measured by a gel permeation chromatography (hereinafter referred to as "GPC").

As component A, one type of the fluorinated elastomer may be used alone, or two or more types may be used. As component A, it is preferred to use one type of the fluorinated elastomer.

The fluorinated elastomer as component A is preferably an elastomer comprising units based on at least one type of monomer (hereinafter referred to also as "monomer (MA1)") selected from tetrafluoroethylene (TFE), hexafluoropropylene (HFP), vinylidene fluoride (VdF) and chlorotrifluoroethylene (CTFE).

In a case where the fluorinated elastomer is an elastomer comprising units based on monomer (MA1), such a fluorinated elastomer may be an elastomer composed solely of two or three types of units selected from units based on TFE (hereinafter referred to also as "TFE units", the same applies to other units), HFP units, VdF units and CTFE units, or an elastomer composed of at least one type of units based on monomer (MA1), and other monomer (hereinafter referred to also as "monomer (MA2)") other than monomer (MA1), which is copolymerizable with monomer (MA1) so that the elastomer would be an elastic copolymer.

Monomer (MA2) may be at least one compound selected from the group consisting of ethylene, propylene, a perfluoro(alkyl vinyl ether) (PAVE), vinyl fluoride (VF), 1,2-difluoroethylene (DiFE), 1,1,2-trifluoroethylene (TrFE), 3,3,3-trifluoro-1-propylene (TFP), 1,3,3,3-tetrafluoropropylene, and 2,3,3,3-tetrafluoropropylene. Here, in a polymer, a unit based on ethylene will be represented by "E", and a unit based on propylene will be represented by "P".

Here, PAVE is a compound represented by the following formula (I), and specifically, perfluoro(methyl vinyl ether) (PMVE), perfluoro(ethyl vinyl ether) (PEVE), perfluoro(propyl vinyl ether) (PPVE), or perfluoro(butyl vinyl ether) (PBVE) may be mentioned.

CF₂=CF(OR^{F}) (I)

wherein R^{F} is a C₁₋₈ linear or branched perfluoroalkyl group.

The fluorinated elastomer may have at least one type of units based on other monomer (hereinafter referred to also as "monomer (MA3)") other than monomer (MA1) and monomer (MA2), which is copolymerizable with monomer (MA1) so that the elastomer would be an elastic copolymer.

Among all units constituting the fluorinated elastomer, the units based on monomer (MA3) are preferably at most 20 mol%, more preferably at most 5 mol%, and further preferably, the elastomer has no units based on monomer (MA3).

The fluorinated elastomer is preferably such that 100 mol% of all units constituting the fluorinated elastomer consists of two or three types of units based on monomer (MA1), or consists of at least one type of units based on monomer (MA1) and at least one type of units based on monomer (MA2). However, it is allowable to contain other units than these, as impurities, so long as they do not affect the characteristics of the present composition.

The elastomer consisting of two or three types of units based on monomer (MA1), and the elastomer consisting of at least one type of units based on monomer (MA1) and at least one type of units based on monomer (MA2) will contribute to the flexibility of the molded product.

The fluorinated elastomer as component A may be TFE/P-containing copolymer (meant for a copolymer containing TFE units and P units; here, the proportion of the total of the respective units connected by "/", i.e. the total of TFE units and P units in the case of TFE/P-containing copolymer, is preferably at least 50 mol% in the total of all units, and the same applies also to other "-containing copolymers"), HFP/VdF-containing copolymer, or TFE/PAVE-containing copolymer.

Here, TFE/PAVE-containing copolymer which may be a copolymer having TFE units and PAVE units, may not include one which further contain P units or VdF units. Further, HFP/VdF-containing copolymer which may be a copolymer having HFP units and VdF units, may not include one which further contains P units.

TFE/P-containing copolymer may, for example, be TFE/P (meant for a copolymer consisting of TFE units and P units, the same applies to other), TFE/P/VF, TFE/P/VdF, TFE/P/E, TFE/P/TFP, TFE/P/PAVE, TFE/P/1,3,3,3-tetrafluoropropene, TFE/P/2,3,3,3-tetrafluoropropene, TFE/P/TrFE, TFE/P/DiFE, TFE/P/VdF/TFP, TFE/P/VdF/PAVE, and among them, TFE/P is preferred.

HFP/VdF-containing copolymer may, for example, be HFP/VdF, TFE/VdF/HFP, TFE/VdF/HFP/TFP, TFE/VdF/HFP/PAVE, VdF/HFP/TFP, VdF/HFP/PAVE, and among them, HFP/VdF is preferred.

TFE/PAVE-containing copolymer may, for example, be TFE/PAVE, TFE/PMVE, TFE/PMVE/PPVE, and among them, TFE/PMVE is preferred.

As the fluorinated elastomer, in addition to the above TFE/P-containing copolymer, HFP/VdF-containing copolymer and TFE/PAVE-containing copolymer, TFE/VdF/2,3,3,3-tetrafluoropropene, VdF/PAVE, VdF/2,3,3,3-tetrafluoropropene, and E/HFP may also be mentioned.

Among the above-mentioned fluorinated elastomers, TFE/P-containing copolymer, HFP/VdF-containing copolymer and TFE/PAVE-containing copolymer are preferred, TFE/P-containing copolymer is more preferred, and TFE/P-containing copolymer is further preferred.

Compositions of these elastomers are preferably in the following ranges from the viewpoint of easily contributing to the flexibility of the molded product obtainable from the present composition.

In TFE/P, TFE:P (meant for the molar ratio of TFE units to P units, the unit is mol%:mol%, i.e. 100 mol% in total, the same applies to other molar ratios) is preferably 30 to 80:70 to 20, more preferably 40 to 70:60 to 30, further preferably 60 to 50:40 to 50. In TFE/P/VF, preferably TFE:P:VF = 30 to 60:60 to 20:0.05 to 40, in TFE/P/VdF, preferably TFE:P:VdF = 30 to 60: 60 to 20:0.05 to 40, in TFE/P/E, preferably TFE:P:E = 20 to 60:70 to 30:0.05 to 40, in TFE/P/TFP, preferably TFE:P:TFP = 30 to 60:60 to 30:0.05 to 20, in TFE/P/PAVE, preferably TFE:P:PAVE = 40 to 70:60 to 29.95:0.05 to 20, in TFE/P/1,3,3,3-tetrafluoropropene, preferably TFE:P:1,3,3,3-tetrafluoropropene = 30 to 60:60 to 20:0.05 to 40, in TFE/P/2,3,3,3-tetrafluoropropene, preferably TFE:P:2,3,3,3-tetrafluoropropene = 30 to 60:60 to 20:0.05 to 40, in TFE/P/TrFE, preferably TFE:P:TrFE = 30 to 60:60 to 20:0.05 to 40, in TFE/P/DiFE, preferably TFE:P:DiFE = 30 to 60:60 to 20:0.05 to 40, in TFE/P/VdF/TFP, preferably TFE:P:VdF:TFP = 30 to 60:60 to 20:0.05 to 40:0.05 to 20, in TFE/P/VdF/PAVE, preferably TFE:P:VdF:PAVE = 30 to 70:60 to 20:0.05 to 40:0.05 to 20, in HFP/VdF, preferably HFP:VdF = 99 to 5: 1 to 95, in TFE/VdF/HFP, preferably TFE:VdF:HFP = 20 to 40:1 to 40:20 to 40, in TFE/ VdF/HFP/TFP, preferably TFE:VdF:HFP:TFP = 30 to 60:0.05 to 40:60 to 20:0.05 to 20, in TFE/VdF/HFP/PAVE, preferably TFE:VdF:HFP:PAVE = 30 to 70:60 to 20:0.05 to 40:0.05 to 20, in VdF/HFP/TFP, preferably VdF:HFP:TFP = 1 to 90:95 to 5:0.05 to 20, in VdF/HFP/PAVE, preferably VdF:HFP:PAVE = 20 to 90:9.95 to 70:0.05 to 20, in TFE/PAVE, preferably TFE:PAVE = 40 to 70:60 to 30, in TFE/PMVE, preferably TFE:PMVE = 40 to 70:60 to 30, in TFE/PMVE/PPVE, preferably TFE:PMVE:PPVE = 40 to 70:3 to 57:3 to 57, in TFE/VdF/2,3,3,3-tetrafluoropropene, preferably TFE:VdF:2,3,3,3-tetrafluoropropene = 1 to 30:30 to 90:5 to 60, in VdF/PAVE, preferably VdF:PAVE = 3 to 95:97 to 5, in VdF/2,3,3,3-tetrafluoropropene, preferably VdF:2,3,3,3-tetrafluoropropene = 30 to 95: 70 to 5, in E/HFP, preferably E:HFP = 40 to 60:60 to 40.

### (Production of fluorinated elastomer)

The fluorinated elastomer can be produced by copolymerizing at least one type of monomer (MA1) and, as the case requires, at least one type of either one or both of monomer (MA2) and monomer (MA3).

The polymerization method may be an emulsion polymerization method, a solution polymerization method, a suspension polymerization method, a bulk polymerization method, etc. From such a viewpoint that adjustment of the number-average molecular weight of the fluorinated copolymer and the copolymer composition is easy, and the productivity is excellent, preferred is an emulsion polymerization method of polymerizing monomers in the presence of an aqueous medium and an emulsifier.

In the emulsion polymerization method, a latex of an elastomer is obtained via a step (emulsion polymerization step) of polymerizing (emulsion-polymerizing) a monomer component comprising the above monomers in the presence of an aqueous medium, an emulsifier and a radical polymerization initiator. In the emulsion polymerization step, a pH adjusting agent may be added.

### (Fluororesin)

In the present composition, the fluororesin as component B is a melt-moldable resin having a melting point of at least 150°C.

The fluorine content in the fluororesin as component B is preferably from 50 to 74 mass%, more preferably from 53 to 70 mass%. The fluorine content in the fluororesin is, in another embodiment, preferably from 50 to 70 mass%, and, in still another embodiment, preferably from 53 to 74 mass%.

When the fluorine content in the fluororesin is at least the above lower limit value, it is possible to obtain a molded product excellent in heat resistance and chemical resistance. When the fluorine content in the fluororesin is at most the above upper limit value, it is possible to increase the flexibility of the molded product.

The fluorine content in the fluororesin is obtainable by analysis of the fluorine content and represents the proportion of the mass of fluorine atoms to the total mass of all atoms constituting the fluororesin.

The number average molecular weight of the fluororesin as component B is preferably from 10,000 to 1,000,000, more preferably from 20,000 to 500,000, further preferably from 20,000 to 300,000, still more preferably from 50,000 to 300,000. When the number average molecular weight of the fluororesin is at least the above lower limit, the mechanical strength of the molded product will be good. When the number average molecular weight of the fluororesin (B) is at most the above upper limit value, it has high flowability, a fluorinated elastomer can be well dispersed therein, and it is possible to increase the flexibility of the molded product.

The melting point of the fluororesin as component B is at least 150°C, preferably from 150 to 300°C, more preferably from 160 to 280°C, further preferably from 170 to 270°C.

When the melting point of the fluororesin is at least the above lower limit value, the present composition having sufficient heat resistance can be obtained. When the melting point of the fluororesin is at most the above upper limit value, the present composition and a molded product can be produced without requiring a high temperature.

As the fluororesin as component B, one type may be used alone, or two or more types may be used in combination. As the fluororesin, it is preferred to use one type.

The fluororesin is preferably a polymer comprising at least one type of units based on the following monomer (MB1) to monomer (MB7).

Monomer (MB1): TFE, CTFE.

Monomer (MB2): a compound represented by the following formula (II) (hereinafter referred to also as "FAE").

CH₂=CX(CF₂)ₙY (II)

wherein X and Y may be the same or different and are each a hydrogen atom or a fluorine atom, and n is an integer of from 2 to 8.

Monomer (MB3): a fluoroolefin having hydrogen atoms in an unsaturated group, such as VdF, vinyl fluoride, trifluoroethylene, hexafluoroisobutylene, etc.

Monomer (MB4): a fluoroolefin having no hydrogen atom in an unsaturated group, such as HFP, etc. (but, excluding monomer (MB1)).

Monomer (MB5): PAVE.

Monomer (MB6): a perfluoro vinyl ether having two unsaturated bonds, such as CF₂=CFOCF₂CF=CF₂, CF₂=CFO(CF₂)₂CF=CF₂, etc.

Monomer (MB7): a fluorinated monomer having an aliphatic ring structure, such as perfluoro(2,2-dimethyl-1,3-dioxole), 2,2,4-trifluoro-5-trifluoromethoxy-1,3-dioxole, perfluoro(2-methylene-4-methyl-1,3-dioxolane), etc.

From such a viewpoint that the obtainable molded product will be excellent in heat resistance, chemical resistance, weather resistance and non-tackiness, the fluororesin preferably contains units based on monomer (MB1), and more preferably contains TFE units among the units based on monomer (MB1).

Further, from such a viewpoint that the obtainable molded product will be excellent in heat resistance, chemical resistance, weather resistance and non-tackiness, the fluororesin preferably contains units based on monomer (MB1) and units based on at least one type of monomer selected from monomer (MB2) to monomer (MB7), more preferably contains units based on monomer (MB1) and units based on at least one type of monomer selected from monomer (MB2), monomer (MB4) and monomer (MB5), and further preferably contains units based on monomer (MB1), units based on monomer (MB4) and units based on monomer (MB5).

Further, n in the formula (II) is an integer of from 2 to 8, and from the viewpoint of the polymerization reactivity with other monomers, is preferably an integer of from 2 to 6, more preferably an integer of from 2 to 4. When n in the formula (II) is at least the above lower limit value, it is possible to prevent occurrence of a problem such as cracking in the resin. When n in the formula (II) is at most the above upper limit value, it has a good polymerization reactivity.

FAE may specifically be CH₂ =CF(CF₂)₂F, CH₂ =CF(CF₂)₃F, CH₂ =CF(CF₂)₄F, CH₂ =CF(CF₂)₅F, CH₂ =CF(CF₂)₈F, CH₂ =CF(CF₂)₂H, CH₂ =CF(CF₂)₃H, CH₂ =CF(CF₂)₄H, CH₂ =CF(CF₂)₅H, CH₂ =CF(CF₂)₈H, CH₂ =CH(CF₂)₂F, CH₂ =CH(CF₂)₃F, CH₂ =CH(CF₂)₄F, CH₂ =CH(CF₂)₅F, CH₂ =CH(CF₂)₆F, CH₂ =CH(CF₂)₈F, CH₂ =CH(CF₂)₂H, CH₂ =CH(CF₂)₃H, CH₂ =CH(CF₂)₄H, CH₂ =CH(CF₂)₅H, CH₂ =CH(CF₂)₈H.

In a case where the fluororesin contains at least one type of units based on monomer (MB1) to monomer (MB7), the fluororesin may contain at least one type of units based on a monomer (hereinafter referred to also as "MB8") other than monomer (MB1) to monomer (MB7), which is copolymerizable with monomer (MB1) to monomer (MB7).

Monomer (MB8) may be a monomer having no functional group, or a functional group-containing monomer.

As a monomer having no functional group, the following monomers may be mentioned.

α-Olefins: ethylene, propylene, butene, etc.

Alkyl vinyl ethers: ethyl vinyl ether, propyl vinyl ether, butyl vinyl ether, isobutyl vinyl ether, cyclohexyl vinyl ether, etc.

Vinyl esters: vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylanate, vinyl hydroxyacetate, vinyl hydroxypropionate, vinyl hydroxybutyrate, vinyl hydroxyvalerate, vinyl hydroxyisobutyrate, vinyl hydroxycyclohexanecarboxylate, etc.

Alkyl allyl ethers: ethyl allyl ether, propyl ally ether, butyl allyl ether, isobutyl allyl ether, cyclohexyl ally ether, etc.

Alkyl allyl esters: ethyl allyl ester, propyl allyl ester, butyl ally ester, isobutyl ally ester, cyclohexyl ally ester, etc.

As a functional group-containing monomer, for example, the following monomers may be mentioned.

Vinyl ethers having a hydroxyl group or an epoxy group: glycidyl methacrylate, etc.

Unsaturated carboxylic acids: acrylic acid, methacrylic acid, maleic acid, itaconic acid, citraconic acid, undecylenic acid, etc.

Unsaturated carboxylic acid anhydrides: maleic anhydride, itaconic anhydride, citraconic anhydride, himic anhydride, etc.

The fluororesin as component B may be TFE-containing polymer (meant for a polymer having TFE units, the same applies to other "-containing polymers"), VdF-containing polymer, or CTFE-containing polymer.

Here, a polymer having VdF units is regarded as VdF-containing polymer even if it further have TFE units or CTFE units. Further, CTFE-containing polymer does not include one containing either one or both of TFE units and VdF units even if it is a polymer having CTFE units.

TFE-containing polymer may be E/TFE-containing copolymer, TFE/HFP-containing copolymer, or TFE/PAVE-containing copolymer.

CTFE-containing polymer may be E/CTFE-containing copolymer.

Further, as one type of TFE/PAVE-containing copolymer, PFA may be mentioned.

Here, component B is a melt-moldable fluororesin having a melting point of at least 150°C, while component A is an elastic copolymer having no melting point. Thus, for example, TFE/PAVE-containing copolymer as component B and TFE/PAVE-containing copolymer as component A are different.

Among the above fluororesins, from the viewpoint of excellent balance of heat resistance, chemical resistance and mechanical strength, as component B, the following ETFE and E/CTFE-containing copolymer are preferred, and in a certain embodiment, the following ETFE is more preferred, and in another embodiment, E/CTFE-containing copolymer is more preferred.

From the viewpoint of easily contributing to excellent balance of the heat resistance, chemical resistance and mechanical strength of the composition, as E/TFE-containing copolymer, preferred is E/TFE-containing copolymer (hereinafter referred to also as "ETFE") wherein the molar ratio of E units:TFE units is 80:20 to 20:80, and units (hereinafter referred to as also as "third units") other than E units and TFE units are contained in an amount of at most 20 moles to all units. The molar ratio of E units:TFE units in ETFE is more preferably 70:30 to 30:70, further preferably 50:50 to 35:65.

The content of the third units in ETFE is, to all units, preferably from 0.01 to 20 mol%, more preferably from 0.1 to 10 mol%, further preferably from 0.8 to 5 mol%.

As the third units, units based on FAE are preferred.

As ETFE in the case of using ETFE as component B, preferred is ETFE having a melting point of from 150 to 300°C, more preferred is ETFE having a melting point of from 160 to 280°C, and further preferred is ETFE having a melting point of from 170 to 270°C.

Further, as ETFE in the case of using ETFE as component B, preferred is ETFE having a volume flow rate of from 0.1 to 200 mm³/sec, more preferred is ETFE having a volume flow rate of from 0.5 to 100 mm³/sec, and further preferred is ETFE having a volume flow rate of from 1 to 50 mm³/sec.

The volume flow rate is an index showing the melt fluidity of the resin, and serves as an indication of the molecular weight. The larger the volume flow rate, the lower the molecular weight, and the smaller the volume flow rate, the higher the molecular weight.

The volume flow rate is obtainable as an extrusion rate of the resin when extruded in the orifice with a diameter of 2.1 mm and a length of 8 mm under a load of 7 kg at a temperature higher by 50°C than the melting point of the resin, using a flow tester manufactured by Shimadzu Corporation.

### (Other components)

The present composition may contain, in addition to component A and component B, other components as optional components. But, it should not contain a component having such an action as to denature component A or component B at the time of melt-kneading (for example, a crosslinking agent, a crosslinking aid, etc., as described later).

Such other components may be an ethylene copolymer derived from an ethylene copolymer containing epoxy groups, and a flame retardant, and one of them or both of them may be contained in the present composition.

Hereinafter, the "ethylene copolymer derived from an ethylene copolymer containing epoxy groups" may be referred to also as "component C".

The total of such other components occupying the present composition is at most 10 mass%, preferably at most 8 mass%, more preferably at most 5 mass%, of the present composition.

The present composition may contain, in addition to component A and component B, the ethylene copolymer as component C. Component C is capable of increasing the compatibility of component A and component B, and improving the dispersion of component A in component B.

Component C is a component contained in the fluororesin composition as a melt-kneaded product, and is derived from an ethylene copolymer containing epoxy groups prior to melt-kneading. At the time of melt-kneading the ethylene copolymer containing epoxy groups together with said fluorinated elastomer and said fluororesin to form a melt-kneaded product, some or all of the epoxy groups are considered to be lost by the reaction. Disappearance of the epoxy groups during melt-kneading is presumed to contribute to such an action that component C increases the compatibility of component A and component B and thus improves the dispersibility of component A.

The content of component C in the melt-kneaded product is equal to the content of the ethylene copolymer containing epoxy groups in the entire raw material component before melt-kneading (consisting of component A, component B, the ethylene copolymer containing epoxy groups and optionally, a flame retardant). This is because, even if epoxy groups disappear, the mass change between the proportion of the ethylene copolymer containing epoxy groups in the raw material and component C in the present composition, is negligible.

In a case where the present composition contains component C, the content of component C is from 0.1 to 10 parts by mass, preferably from 0.3 to 8 parts by mass, more preferably from 0.5 to 5 parts by mass, to 100 parts by mass of the total of component A and component B.

When the content of component C is at least the above lower limit value, heat discoloration of the present composition or molded product is less likely to occur, and when it is at most the above upper limit value, it is possible to obtain a molded product having sufficient oil resistance and heat resistance.

### <Ethylene copolymer containing epoxy groups>

The ethylene copolymer containing epoxy groups has a melting point whereby it can be melt-kneaded together with the fluorinated elastomer and the fluororesin. That is, its melting point is less than 150°C.

As the ethylene copolymer containing epoxy groups, one type may be used alone, or two or more types may be used in combination. As the ethylene copolymer containing epoxy groups, it is preferred to use one type.

The ethylene copolymer containing epoxy groups may be an ethylene copolymer such as an at least binary copolymer comprising E units and units based on at least one type of monomer having an epoxy group (hereinafter referred to also as "monomer (MC1)"), or an at least ternary copolymer comprising E units, units based on at least one type of monomer (MC1) and units based on at least one type of monomer (hereinafter referred to also as "monomer (MC2)") other than ethylene and monomer (MC1), which is copolymerizable with ethylene.

The monomer (MC1) may be an unsaturated glycidyl ether (allyl glycidyl ether, 2-methylallyl glycidyl ether, vinyl glycidyl ether, etc.), an unsaturated glycidyl ester (glycidyl acrylate, glycidyl methacrylate, etc.), etc.

From such a viewpoint that it is thereby possible to improve the compatibility between component A and component B, preferred as monomer (MC1) is glycidyl methacrylate.

The monomer (MC2) may be an acrylic ester (methyl acrylate, ethyl acrylate, etc.), a methacrylic acid ester (methyl methacrylate, ethyl methacrylate, etc.), a fatty acid vinyl ester (vinyl acetate, etc.), an α-olefin other than ethylene, etc.

From such a viewpoint that it is thereby possible to improve the compatibility between component A and component B, preferred as monomer (MC2) are an acrylic acid ester, a methacrylic acid ester, and a fatty acid vinyl ester (hereinafter collectively referred to also as "monomer (MC3)"; monomer (MC3) is a set of some of monomer (MC2)).

As the ethylene copolymer containing epoxy groups, from such a viewpoint that the characteristics such as the moldability of the present composition and the flexibility, oil resistance, etc. of the molded product, will be more excellent, preferred is an E/glycidyl methacrylate-containing copolymer having E units and glycidyl methacrylate units, and more preferred is an E/glycidyl methacrylate copolymer, or an E/glycidyl methacrylate/monomer (MC3) copolymer.

As the E/glycidyl methacrylate/monomer (MC3) copolymer, an E/glycidyl methacrylate/vinyl acetate copolymer, an E/glycidyl methacrylate/methyl acrylate copolymer, and an E/glycidyl methacrylate/ethyl acrylate copolymer may be mentioned, and an E/glycidyl methacrylate/methyl acrylate copolymer, or an E/glycidyl methacrylate/ethyl acrylate copolymer is preferred.

The content of E units occupying the ethylene copolymer containing epoxy groups is preferably from 55 to 99.9 mol%, more preferably from 70 to 94 mol%, from the viewpoint of heat resistance and toughness of the molded product.

The content of units based on monomer (MC1) occupying the ethylene copolymer containing epoxy groups is preferably from 0.1 to 45 mol%, more preferably from 1 to 10 mol%, from the viewpoint of the moldability of the present composition and the mechanical properties of the molded product.

In a case where the ethylene copolymer containing epoxy groups has units based on monomer (MC2), the content of units based on monomer (MC2) occupying the ethylene copolymer containing epoxy groups, is preferably from 1 to 30 mol%, more preferably from 5 to 20 mol%.

When the ethylene copolymer containing epoxy groups in which the contents of the respective units are within the above ranges, is used, it is possible to further improve the compatibility between component A and component B. As a result, the moldability of the present composition will be excellent, and the obtainable molded product will be more excellent in characteristics such as flexibility, oil resistance, heat resistance, etc.

As the ethylene copolymer containing epoxy groups, commercially available products may also be used, and as such commercial products of the ethylene copolymer containing epoxy groups, "Bondfast (registered trademark) E" (manufactured by Sumitomo Chemical Co., Ltd., E/glycidyl methacrylate copolymer), and "Bondfast 7M" (manufactured by Sumitomo Chemical Co., Ltd., E/glycidyl methacrylate/methyl acrylate copolymer) may be mentioned.

### <Flame retardant>

The flame retardant is not particularly limited, and a known flame retardant may be employed.

As the flame retardant, aluminum hydroxide, magnesium hydroxide, magnesium carbonate, antimony trioxide, sodium antimonate, antimony pentoxide, a phosphazene compound, a phosphate ester, ammonium polyphosphate, melamine polyphosphate·melam·melem, red phosphorus, a molybdenum compound, a borate compound, PTFE, etc. may be mentioned. Among them, preferred is antimony trioxide, an aromatic phosphoric acid ester (triphenyl phosphate, tricresyl phosphate, trixylenyl phosphate, cresyl phenyl phosphate, 2-ethylhexyl diphenyl phosphate, etc.), or PTFE (being an anti-drip agent to form a fibril structure in a resin).

### (Method for producing fluororesin composition)

The fluororesin composition of the present invention is produced by melt-kneading component A, component B and, as the case requires, the optional component, followed by cooling. The cooled melt-kneaded product is preferably a solid melt-kneaded product molded into pellets or granules of an appropriate size, to be used as a molding material. The melt-kneading method is preferably a method for melt-kneading extrusion by an instrument having a melt-kneading extrusion mechanism. The melt-kneading extruded linear melt-kneaded product may be cut in an appropriate size to obtain a melt-kneaded product in the form of pellets or granules.

Here, at the time of melt-kneading and extruding component A and component B, the optional component may be melt-kneaded together with such components.

Component C as an optional component is, as described above, a component derived from an ethylene copolymer having epoxy groups as a raw material. The ethylene copolymer having epoxy groups becomes component C by melt-kneading, but it is considered that in its change (loss of epoxy groups), there is no quantitative change in the material, and thus, the amount of the ethylene copolymer having epoxy groups in the raw material before melt-kneading is from 0 to10 parts by mass to 100 parts by mass of the total of the above specific fluorinated elastomer and the above specific fluororesin.

As the apparatus to be used for melt-kneading extrusion, it is preferred to use an instrument having a twin- or higher multi-screw melt-kneading extrusion mechanism, such as a twin-screw extruder or a multi-screw extruder, and it is more preferred to use a twin-screw extruder equipped with high kneading effect screws, or a multi-screw extruder equipped with high kneading effect screws.

As the high kneading effect screws, it is possible to select ones which present a sufficient kneading effect on the object to be melt-kneaded and extruded, and which present no excessive shearing force.

The instrument having a twin- or higher multi-screw melt-kneading extrusion mechanism is preferably an instrument having a continuous twin- or higher multi-screw melt-kneading extrusion mechanism.

By using an instrument having a continuous twin- or higher multi-screw melt-kneading extrusion mechanism, it is possible to present a sufficient kneading effect on the object to be melt-kneaded and extruded. If an instrument having a batch type melt-kneading extrusion mechanism is used, since the shearing force tends to be insufficient, there may be a case where a sufficient kneading effect may not be presented on the object to be melt-kneaded and extruded.

Further, the instrument having a twin- or higher multi-screw melt-kneading extrusion mechanism is provided with one or more kneading zones, preferably two or more kneading zones.

Further, in the instrument having a twin- or higher multi-screw melt-kneading extrusion mechanism, the ratio (L/D) of the kneading zone length (L) (if provided with two or more kneading zones, the sum of the lengths of the respective kneading zones) to the screw diameter D is preferably from 0.1 to 50, more preferably from 1 to 20, further preferably from 3 to 10.

The kneading temperature in the melt-kneading extrusion is preferably at a temperature higher by at least 5°C, more preferably at a temperature higher by from 5 to 80°C, further preferably at a temperature higher by from 5 to 50°C, than the melting point of component B.

The shear rate in the melt-kneading extrusion is preferably set according to the melt viscosity of the object to be melt-kneaded and extruded, at the above kneading temperature in the melt-kneading extrusion.

The screw rotation speed of the instrument having a twin- or higher multi-screw melt-kneading extrusion mechanism in the melt-kneading extrusion, is preferably from 50 to 700 rpm, more preferably from 100 to 500 rpm, further preferably from 200 to 400 rpm.

In the melt-kneading extrusion, by appropriately adjusting the number of kneading zones, the kneading zone length, the kneading temperature and the shear rate, it is possible to control the storage modulus E' of the present composition, at a temperature higher by 25°C than the melting point of component B, to be at most 250 kPa.

By providing more kneading zones, in the melt-kneading extrusion, it is possible to reduce the particle diameter of component A dispersed in component B and thus to bring about a better dispersed state.

Further, by elongating the kneading zone length (if provided with two or more kneading zones, the sum of lengths of the respective kneading zones), in the melt-kneading extrusion, it is possible to reduce the particle diameter of component A dispersed in component B and thus to bring about a better dispersed state.

Further, by adjusting the kneading temperature to be higher, in the melt-kneading extrusion, it is possible to reduce the particle diameter of component A dispersed in component B and thus to bring about a better dispersed state.

Further, by adjusting the shear rate to be larger, in the melt-kneading extrusion, it is possible to reduce the particle diameter of component A dispersed in component B and thus to bring about a better dispersed state.

By adjusting these conditions appropriately, in the melt-kneading extrusion, component A dispersed in component B can be made to have a sufficiently small particle size to bring about a sufficiently dispersed state, and thus, it is possible to control the storage modulus E' of the present composition at a temperature higher by 25°C than the melting point of component B, to be at most 250 kPa.

The melt-kneading extrusion is carried out until the viscosity of the object to be melt-kneaded and extruded, becomes to be constant. The viscosity change during the melt-kneading extrusion of the object to be melt-kneaded and extruded can be observed by the change with time of the rotational torque by a torque meter via a screw.

Here, "until the viscosity of the object to be melt-kneaded and extruded, becomes to be constant" means that the melt-kneading extrusion is conducted until the change in the value of the rotational torque becomes to be within 5% from the center value over a predetermined time.

The time required for melt-kneading extrusion may vary depending on the kneading temperature, the shear rate, the composition of the object to be melt-kneaded and extruded, the screw shape of the instrument having a twin- or higher multi-screw melt-kneading extrusion mechanism, but from the viewpoint of economy and productivity, it is preferably from 1 to 30 minutes, more preferably from 1 to 20 minutes, further preferably from 2 to 10 minutes.

The form of component A to be used in the melt-kneading extrusion is preferably crumb. Particularly, it is preferred to use crumb of a fluorinated elastomer obtained by drying and aggregating a latex of the elastomer obtained by emulsion polymerization.

The form of component B to be used in the melt-kneading extrusion is preferably a powder. As the powder, one having a small particle size is more preferred. When the particle diameter is small, not only kneading in melt-kneading extrusion will be easy, but it will be easy to obtain a homogeneous melt-kneading and extruding state. In particular, as the powder, preferred is a powder of a fluororesin obtained by drying a resin slurry obtained by solution polymerization.

Further, before carrying out the melt-kneading extrusion, crumb of component A and a powder of component B may be mixed without heating by using a known apparatus. Further, crumb of component A and a powder of component B may be mixed in an instrument having a twin- or higher multi-screw melt-kneading extrusion mechanism at the time of the melt-kneading extrusion.

### [Molding material]

The molding material of the present invention is a molding material comprising the present composition. Hereinafter, a molding material comprising the present composition will be referred to also as "the present molding material".

The present molding material comprising the present composition is a molding material in the form of pellets, granules, a powder, etc., and the present molding material containing the following formulation agents is preferably a mixture of the present composition and the formulation agents, in the form of pellets, granules, a powder, etc. Depending on the case, in the case of a molding material containing a formulation agent other than the formulation agent reactive with a component in the present composition such as a crosslinking agent, it may be a molding material formed by melt-mixing the present composition and the formulation agent, into the shape of pellets, granules, a powder or the like.

The present molding material has a melt viscosity lower than component A contained in the present composition, and thus, it is possible to set the withdrawing speed to be large, whereby the molding processability will be excellent.

Depending upon the particular use of the molded product, the present molding material may contain, in addition to the present composition, at least one type of additives such as a crosslinking agent, a crosslinking aid, a filler, a stabilizer, a colorant, an antioxidant, a processing aid, a lubricant, a lubricating agent, an antistatic agent, etc. In the case of producing a crosslinked molded product, it is preferred that among these additives, a crosslinking agent or a crosslinking aid is contained.

As the crosslinking agent, all of conventional ones may be used, but an organic peroxide is preferred. As the organic peroxide, any one may be used so long as it is capable of easily generating radicals under heating or in the presence of redox. The present composition crosslinked by using an organic peroxide is excellent in heat resistance.

Specific examples of the organic peroxide may be 1,1-di(t-hexyl peroxy)-3,5,5-trimethylcyclohexane, 2,5-dimethylhexane-2,5-dihydroperoxide, di-t-butyl peroxide, t-butyl cumyl peroxide, dicumyl peroxide, a,a'-bis(t-butylperoxy)-p-diisopropylbenzene, 2,5-dimethyl-2,5-di(t-butylperoxy)-hexane, 2,5-dimethyl-2,5-di(t-butylperoxy)-hexine-3, dibenzoyl peroxide, t-butylperoxy benzene, 2,5-dimethyl-2,5-di(benzoyl peroxy)hexane, t-butylperoxy maleic acid, t-hexylperoxy isopropyl monocarbonate, etc. Among them, a,a'-bis(t-butylperoxy)-p-diisopropylbenzene may be mentioned. These organic peroxides are excellent in crosslinking properties of the fluorinated elastomer composition.

In the case of producing a crosslinked molded product, the content of the crosslinking agent in the present molding material is preferably from 0.1 to 5 parts by mass, more preferably from 0.2 to 4 parts by mass, further preferably from 0.5 to 3 parts by mass, to 100 parts by mass of component A. When the content of the crosslinking agent is within the above range, crosslinking efficiency of the organic peroxide is high.

As the crosslinking agent, at least one type may be used.

As the crosslinking aid, triallyl cyanurate, triallyl isocyanurate, triacrylformal, triallyl trimellitate, dipropargyl terephthalate, diallyl phthalate, tetraallyl terephthalamide, triallyl phosphate, etc. may be mentioned. Among them, triallyl isocyanurate is preferred.

In the case of producing a crosslinked molded product, the content of the crosslinking aid in the present molding material is preferably from 0.1 to 30 parts by mass, more preferably from 0.5 to 15 parts by mass, further preferably from 1 to 10 parts by mass, to 100 parts by mass of component A. When the content of the crosslinking aid is at least the above lower limit value, the crosslinking rate will be large, and a sufficient degree of crosslinking can be easily obtained. When the content of the crosslinking aid is at most the above upper limit value, the characteristics such as elongation, etc. of the crosslinked product become to be good.

As the crosslinking aid, at least one type may be used.

As the filler, carbon black, white carbon, clay, talc, calcium carbonate, glass fiber, carbon fiber, a fluororesin (polytetrafluoroethylene, ETFE, etc.), etc. may be mentioned.

As the carbon black, any one may be used without limitation so long as it is one used as a filler for fluorocarbon rubber. Specific examples thereof include furnace black, acetylene black, thermal black, channel black, graphite, etc., and furnace black is preferred. As the furnace black, HAF-LS carbon, HAF carbon, HAF-HS carbon, FEF carbon, GPF carbon, APF carbon, SRF-LM carbon, SRF-HM carbon, MT carbon, etc. may be mentioned, and among them, MT carbon is more preferred.

In a case where the present molding material contains carbon black, the content of carbon black is preferably from 1 to 50 parts by mass, more preferably from 3 to 20 parts by mass, to 100 parts by mass of component A. When the content of carbon black is at least the above lower limit value, the strength of the molded product will be excellent, and it is possible to sufficiently obtain a reinforcing effect due to incorporation of carbon black. Further, when the content of carbon black is at most the above upper limit value, the elongation of the molded product will also be excellent. Thus, when the content of carbon black is within the above range, the balance between the strength and the elongation of the molded product will be good.

In a case where the present molding material contains a filler other than carbon black, the content thereof is preferably from 5 to 200 parts by mass, more preferably from 10 to 100 parts by mass, to 100 parts by mass of the present composition.

Here, as the filler, at least one type may be used, and carbon black and other fillers may be used in combination. In a case where the present molding material contains carbon black and other fillers, their content is preferably from 1 to 100 parts by mass, more preferably from 3 to 50 parts by mass, to 100 parts by mass of the present composition.

As the stabilizer, copper iodide, lead oxide, calcium oxide, magnesium oxide, aluminum oxide, titanium oxide, antimony oxide, phosphorus pentoxide, etc. may be mentioned. The content of the stabilizer in the present molding material is preferably from 0.1 to 10 parts by mass, more preferably from 0.2 to 5 parts by mass, further preferably from 0.5 to 3 parts by mass, to 100 parts by mass of the present composition. As the stabilizer, at least one type may be used.

As the processing aid, a higher fatty acid, an alkali metal salt of a higher fatty acid, etc. may be mentioned, and specifically, stearic acid, a stearate or a laurate is preferred. The content of the processing aid in the present molding material is preferably from 0.1 to 10 parts by mass, more preferably from 0.2 to 5 parts by mass, further preferably from 1 to 3 parts by mass, to 100 parts by mass of the present composition. As the processing aid, at least one type may be used.

As the lubricant, a higher fatty acid, an alkali metal salt of a higher fatty acid, etc. may be mentioned, and specifically, stearic acid, a stearate or a laurate is preferred. The content of the lubricant is preferably from 0.1 to 20 parts by mass, more preferably from 0.2 to 10 parts by mass, further preferably from 1 to 5 parts by mass, to 100 parts by mass of the present composition.

### [Molded product]

The molded product of the present invention is a molded product obtained by melt-molding the present molding material. Further, the molded product of the present invention may be a molded product obtained by crosslinking at the time of melt-molding the present molding material, or a molded product obtained by crosslinking, after molding, of a molded product obtained by melt-molding the present molding material. Hereinafter, a molded product obtained by melt-molding the present molding material will be referred to also as "the present molded product".

As a method for melt-molding to produce the present molded product, injection molding, extrusion molding, coextrusion molding, blow molding, compression molding, inflation molding, transfer molding, calendar molding, etc. may be mentioned.

A crosslinking method to produce the present molded product made of a crosslinked product, is not particularly limited, and may be a chemical crosslinking method using the present molding material containing a crosslinking agent, or a radiation crosslinking method using ionizing radiation such as X-rays, γ-rays, electron beam, proton beam, deuteron line, α-rays, β-rays, etc. Crosslinking may be carried out at the same time as molding, or crosslinking may be carried out after molding.

The shape of the present molded product is not particularly limited, and may be made into a film or sheet shape, a hollow hose-shape or tube-shape, or various other shapes depending on particular applications.

The present molded product may itself be an independent molded product, or may be one associated with another member, such as a covering material.

As the present molded product, preferred is a molded product which is a film, sheet, hose or tube of a single-layer or multilayer structure, and at least one of the layers in such a molded product is a layer formed by melt-molding the present molding material. Also preferred is a covered electric wire having a conductor and a covering material, wherein the covering material is a covering material formed by melt-molding the present molding material.

### [Film or sheet]

As specific applications of the film- or sheet-shape present molded product, releasing applications and agricultural applications may be mentioned. The film or sheet may be single-layered or may be a laminate of two or more layers. In the case of the laminate, at least one layer is a layer formed of the present molding material, and it may contain a layer formed of a material other than the present molding material.

Applications of the above film or sheet are not particularly limited. For example, the following applications may be mentioned.

A semiconductor release film, a substrate release film, a release film for sealing process of an optical element such as a light emitting diode (LED), anticorrosion lining, releasing lining, anticorrosion coating, release coating, wire covering, a release film for molding a carbon or glass fiber composite, an antifouling film for office equipment such as a copying roll or copying belt, a flameproofing film material, a green sheet or fuel cell electrode, a carrier film for producing a membrane, a high heat-pressing cushion film (a die attach cushion film, etc.), a solar battery surface protective film, a solar battery backsheet constituting material, a carrier film for a sheet member of various types (a green sheet, a silicon film, etc.), a laminate film for rubber stopper, a laminate film for fire-fighting clothing, a display surface protective sheet material, a film material for a film structure construction, an exterior material for agricultural houses, chemical bags or lithium ion batteries (LIB), a PVC laminate for construction material or wallpaper, a steel laminate, an insulation material (motor insulation), etc. Here, a green sheet is meant for a non-sintered ceramic sheet for a ceramic capacitor.

A film or sheet as the present molded product is excellent in flexibility, and thus is particularly suitable for use as a semiconductor release film, a release film for sealing process of an optical element such as LED, or a laminate film for rubber stopper. The film or sheet may be single-layered, or may be a laminate of two or more layers.

### [Covered electric wire]

In a covered electric wire having a coating material as the present molded product, the covering material formed on the outer circumference of a core wire may not only be one formed in direct contact with the core wire but also be one formed indirectly via another layer on the outer circumference between the core wire. Specifically, the covered electric wire of the present invention includes, not only one having a conductor covered with the molded product of the present invention as the covering material, but also an electric wire wherein the molded product as a covering material is used as the outer layer, such as one like a cable or wire harness having a sheath. As such a molded product, the above-mentioned film may be mentioned.

The conductor is not particularly limited and may, for example, be copper, a copper alloy, aluminum or an aluminum alloy, a plating wire, such as tin plating, silver plating, nickel plating, etc., a strand, a superconductor, a semiconductor device-lead plating wire, etc.

A covered electric wire having a conductor covered by using the molded product of the present invention as a covering material, can be produced by covering the conductor with the present molding material. Covering of the conductor with the present molding material can be carried out by a known method.

A covered electric wire using the present molded product as a covering material may be made to be a covered electric wire using a crosslinked product of the present molded product as a covering material, which is obtainable by crosslinking the present molded product by irradiating a covered electric wire having a conductor covered with the present molded product, with electron beam.

The irradiation dose of electron beam during the crosslinking is preferably from 50 to 700 kGy, more preferably from 80 kGy to 400 kGy, further preferably from 100 to 250 kGy. The temperature during irradiation with electron beam is preferably from 0 to 300°C, more preferably from 10 to 200°C, further preferably from 20 to 100°C.

The present molding material is excellent in moldability and thus can produce a covered electric wire at a high speed. Further, it contains component A, whereby as compared with a covered electric wire wherein only B component being thermoplastic is used as the covering material, continuous use at a high temperature is possible, and the flexibility is excellent, and thus, it is suitable for use as a covered electric wire for an automobile which is required for wiring in a limited space. The covering material may be single-layered or may be a laminate of two or more layers.

### [Hose or tube]

A hose or tube being the present molded product may be a multilayer structure comprising a layer of the present molded product and a layer made of another material. Another material may, for example, be one described in Paragraph [0040] of WO2015/182702, a liquid crystal polymer, a polyaryl ketone, a polyether sulfone, a polyphenyl sulfone, a polyacetal, a polyurethane, etc. Among them, a polyamide is preferred.

As the polyamide, polyamide 6, polyamide 66, polyamide 46, polyamide 11, polyamide 12, polyamide 610, polyamide 612, polyamide 6/66 copolymer, polyamide 6/66/610 copolymer, polyamide MXD6, polyamide 6T, polyamide 9T and polyamide 6/6T copolymer, and those described in paragraphs [0051] [0052] of Patent No. 4,619,650, etc. may be mentioned.

With respect to the structure, production process, etc. for a multilayer hose, reference may be made by replacing "the inner layer (I) made of a fluorinated copolymer" in paragraphs [0053] to [0063] of Patent No. 4,619,650 by the molded product of the present invention.

Further, another layer may be provided between the layer of the polyamide and the layer of the present molded product. As another layer, since adhesion is good, preferred is component B having a functional group-containing monomer as monomer (MB8). Specifically a fluorinated polymer described in WO2015/182702 may be mentioned.

Applications of the hose or tube are not particularly limited. For example, the following applications may be mentioned.

Automotive hoses, for example, various oil hoses including fuel hoses, intake and exhaust system hoses, transmission system hoses such as ATF hoses, tubes for parts, etc., and as other than for automotive, various tubes or hoses in chemical plants, food plants, food equipment or general industrial parts, such as gas-liquid tubes such as chemical tubes, chemical hoses, steam tubes, steam hoses, etc., which are not particularly limited. In the case of a tube with a thickness of 1 mm, an outer diameter of 8 mm and an inner diameter of 6 mm, the minimum bending radius of the tube is preferably 42 mm or less, more preferably 40 mm or less, most preferably 38 mm or less.

The present molding material is excellent in moldability and thus can produce a hose or tube at a high speed. Further, a hose or tube being the present molded product is excellent also in flexibility, and therefore, is suitable for use in automotive applications requiring wiring in a limited space. The hose or tube may be single-layered or may be a laminate of two or more layers.

In addition to the above applications, the present molded product can be made to be an electrically insulating material such as a sheath material or an insulation covering material for a cable, to be used in an electric component, and further can be used as a gasket, a packing, a diaphragm, etc. in various plants for petroleum refining, petrochemical, electric power, papermaking, etc. Further, it can be made into various components to be used in various industrial fields such as the automotive field, the industrial robot field, the thermal equipment field, etc.

Among them, it is suitable for use in sealing applications, such as various seals, rings, gaskets, packings, joint sheets, pump seals, oil seals, diaphragms, etc. or in wire and electric equipment-related material applications, such as insulating materials, sheath, etc. Further, it is useful for other applications, such as vibration-proof material, rolls, scrapers, valve parts, pump parts, mandrels, joints, resin plates, coverings, paints, plugs, pipings, sanitary packing, connectors, etc.

### (Advantageous effects)

The present inventors have found that when the present composition is molded, not only in static molding such as press molding, but also in dynamic molding such as extrusion molding, it is possible to obtain a good molded product excellent in surface smoothness. Whereas, they have found that by the conventional fluororesin composition, while in a static molding such as press molding, it is possible to obtain a molded product having good properties, in a dynamic molding such as extrusion molding, it is not possible to maintain such properties, and there are cases where defective molding occurs such that the surface smoothness tends to be insufficient.

In order to clarify the cause as to why this difference occurs, with respect to the respective fluororesin compositions, evaluation of the characteristics have been conducted, and as a result, it has been found that a difference is observed in storage modulus E' between the fluororesin compositions.

The storage modulus E' of a fluororesin composition is considered to be an index showing the dispersibility of a fluorinated elastomer in the fluororesin composition.

That is, in a case where the fluorinated elastomer is not sufficiently dispersed in the fluororesin, even if the temperature becomes to be higher than the melting point of the fluororesin, no sufficient fluidity can be obtained due to the influence of the continuous phase of the fluorinated elastomer, and the storage modulus E' of the fluororesin composition becomes to be large.

In contrast, in a case where the fluorinated elastomer is dispersed in a sufficiently small particle size in the fluororesin, when the fluororesin melts at a temperature of at least the melting point of the fluororesin, the fluidity of the entire fluororesin composition increases, and the storage modulus E' of the fluororesin composition becomes to be small.

As a cause for a trouble occurring in the dynamic molding if the storage modulus E' of the fluororesin composition is large, the following is considered. That is, in the fluororesin composition having a large storage modulus E', even if, at first glance, it may look like that the fluorinated elastomer is well dispersed in the fluororesin, the particle size of the fluorinated elastomer is presumably larger as compared with the particle size of the fluorinated elastomer in the present composition. Therefore, the fluorinated elastomer having a low compatibility with the fluororesin tends to mutually agglomerate during dynamic molding, whereby it is considered difficult to maintain the dispersed state. That is, it is considered that when the fluorinated elastomer is not dispersed in a sufficiently small particle size, dispersion of the fluorinated elastomer is a non-equilibrium state, and particularly in the dynamic molding, the phase separation by spinodal decomposition progresses.

Therefore, it is presumed that by the conventional fluororesin composition, while it is possible to obtain a molded product having good properties in a static molding such as press molding, in a dynamic molding such as extrusion molding, a fluorinated elastomer which has been dispersed, is aggregated by phase separation by spinodal decomposition, and even the fluororesin composition exhibiting excellent physical properties in a state before molding, its physical properties are changed by conducting dynamic molding, and it would be unable to maintain the good physical properties before the molding.

In contrast, in the present composition, the fluorinated elastomer in the fluororesin composition is dispersed in a sufficiently small particle size, and thus, the storage modulus E' of the fluororesin composition is considered to become small at a level of at most 250 kPa. Further, it is considered that since the fluorinated elastomer in the fluororesin composition is dispersed in a sufficiently small particle size, the progress of the phase separation by spinodal decomposition is suppressed, and even when the molding material containing the fluororesin composition is subjected to dynamic molding, it is possible to obtain a good molded product excellent in surface smoothness.

### EXAMPLES

In the following, the present invention will be described specifically with reference to Examples, but the present invention is not limited to these Examples.

The materials used in Examples are as follows.

### <Fluorinated elastomer>

A1: A fluorinated elastomer (TFE/P copolymer (molar ratio of TFE units/P units = 56/44, fluorine content = 57 mass%, Mooney viscosity (ML₁₊₁₀ (121°C)) = 120, glass transition temperature (Tg) = -3°C, storage shear modulus G' = 530)), produced by the following production method.

Inside of a 3.2L reactor equipped with a stirring anchor blade was degassed, and 1,500 g of deionized water, 59 g of disodium hydrogenphosphate dodecahydrate, 0.7 g of sodium hydroxide, 197 g of tert-butanol, 9 g of sodium lauryl sulphate and 6 g of ammonium persulfate were added. Further, an aqueous solution prepared by dissolving 0.4 g of disodium ethylenediamine tetraacetate dihydrate and 0.3 g of ferrous sulfate heptahydrate in 100 g of deionized water, was added to the reactor. The pH of the aqueous medium in the reactor at that time was 9.5.

Then, at 25°C, a monomer mixed gas of TFE/propylene = 88/12 (molar ratio) was injected so as to bring the internal pressure of the reactor to 2.50 MPaG. The anchor blade was rotated at 300 rpm, and then a 2.5 mass% aqueous solution of sodium hydroxy methane sulfinate dihydrate adjusted to pH10.0 with sodium hydroxide (hereinafter referred to "Rongalite 2.5 mass% aqueous solution") was added to the reactor to initiate the polymerization reaction. Thereafter, the Rongalite 2.5 mass% aqueous solution was continuously added to the reactor using a high pressure pump. At the time when the total amount of injection of the monomer mixed gas of TFE/propylene became 1,000 g, the addition of the Rongalite 2.5 mass% aqueous solution was stopped, the internal temperature of the reactor was cooled to 10°C, and the polymerization reaction was stopped, to obtain a latex of a fluorinated elastomer. The addition amount of the Rongalite 2.5 mass% aqueous solution was 68 g. The polymerization time was 6 hours. To the above latex, a 5 mass% aqueous solution of calcium chloride was added to coagulate the latex of fluorinated elastomer A1, and the fluorinated elastomer was precipitated and collected by filtration.
A2: A fluorinated elastomer (TFE/P copolymer (molar ratio of TFE units/P unit= 56/44, fluorine content: 57 mass%, Mooney viscosity (ML₁₊₁₀ (121°C)) = 100, glass transition temperature (Tg) = -3°C, storage shear modulus G' = 390)), produced in the same manner as in the production method for the above A1, except that the polymerization temperature was changed from 25°C to 40°C.

### <Fluororesin>

B1: A fluororesin (ethylene/TFE/ (perfluorobutyl)ethylene copolymer (molar ratio of E units/TFE units/(perfluorobutyl)ethylene units = 40/57/3, melt flow rate (MFR) = 25 g/10 min, Tg = 75°C, Tm = 225°C)), produced in the same manner as in Example 9 in WO2016/006644.
B2: A fluororesin (ethylene/TFE/(perfluorobutyl)ethylene copolymer (molar ratio of E units/TFE units/(perfluorobutyl)ethylene units = 46.0/54.0/1.50, melt flow rate (MFR) = 11.3 g/10 min, Tg: 240°C, Tm = 255°C)), produced in the same manner as in Example 2 in WO2016/002887.

### <Ethylene copolymer containing epoxy groups>

C1: "Bondfast (registered trademark) 7M" (E/glycidyl methacrylate/methyl acrylate copolymer, manufactured by Sumitomo Chemical Co., Ltd.).

### <Measurement of storage shear modulus G'>

The storage shear modulus G' of the fluorinated elastomer is G' at 50 cpm at the time of measuring the torque by changing the frequency from 1 to 2 000 cpm in accordance with ASTM D6204, using Rubber Process Analyzer (RPA2000, manufactured by Alpha Technology Co., Ltd.) in a sample amount of 7.5 g at a temperature of 100°C at a displacement of 0.5°, and calculating G' and G" from the measured values.

### <Measurement of storage modulus E' and loss modulus E">

The storage modulus and the loss modulus of a fluororesin composition were measured by cutting out a test specimen from a sheet with a length of 130 mm, a width of 130 mm and a thickness of 1 mm prepared by pre-heating at 255°C for 5 minutes, followed by press-molding for 5 minutes, and by using DMA (EXSTAR6000, manufactured by Seiko Instruments Co., Ltd.). The storage modulus and the loss modulus are values to be measured in an air atmosphere at 250°C, and a test specimen with a length of 45 mm, a width of 8 mm and a thickness of 1 mm was measured under conditions of tensile mode, gripping width = 20 mm, measurement temperature = from 25°C to 300°C, temperature raising rate = 3°C /min. and frequency = 10 Hz. The storage modulus E' and the loss modulus E" are the storage modulus and the loss modulus at a temperature higher by 25°C than the melting point of the fluororesin; and the storage modulus E' represents the elastic component, and the loss modulus E" represents the viscous component.

### <Evaluation of the surface condition of molded product>

Using an extruder (MS30-25, manufactured by IKG Corporation), a screw (full flight, L/D = 24, diameter of 30 mm, manufactured by IKG Corporation), a wire dies crosshead (maximum conductor diameter: 3 mm, maximum die hole diameter: 20 mm, manufactured by UNITEK Co.), a wire withdrawing machine (manufactured by Hijiri Manufacturing Ltd.) and a winder (manufactured by Hijiri Manufacturing Ltd.), under conditions of kneading temperature = 270°C, screw rotation speed = 35 rpm and withdrawing speed = 10 m/min., from a fluororesin composition and a core wire (tinned copper kneading wire, diameter: 1.8 mm, construction: 37/0.26 mm (1st layer: right twisted 7, 2nd layer: left twisted 12, third layer: right twisted 18), manufactured by Yasuda Kogyo Co., Ltd.), an electric wire sample having a covering thickness of 0.5 mm and a wire diameter of 2.8 mm was obtained. The surface roughness of the obtained electric wire sample was visually confirmed. One excellent in surface smoothness with no surface roughness was evaluated to be "A", and one inferior in surface smoothness with surface roughness observed, was evaluated to be "B".

### <Measurement of minimum bending radius of tube>

Measured in accordance with JIS B8381.
[Ex. 1]
   Using a twin-screw extruder (KZW32TW-45MG-NH, manufactured by TECHNOVEL Ltd., continuous type), 50 parts by mass of A1, 50 parts by mass of B1 and1 part by mass of C1 were melt-kneaded and extruded, to obtain a fluororesin composition. The melt-kneading extrusion was conducted under conditions of a screw rotation speed of 250 rpm at 240°C for 2 minutes. Further, in the twin-screw extruder, kneading zones at two locations were provided, and the ratio (L/D) of the total length L of the kneading zones at two locations to the screw diameter D was set to be 6.
[Ex. 2]
   A fluororesin composition was obtained in the same manner as in Ex. 1 except that A2 was used instead of A1.
[Ex. 3]
   A fluororesin composition was obtained in the same manner as in Ex. 1 except that the kneading temperature was changed to 280°C.
[Ex. 4]
   A fluororesin composition was obtained in the same manner as in Ex. 1 except that the kneading temperature was changed to 300°C.
[Ex. 5]
   A fluororesin composition was obtained in the same manner as in Ex. 4 except that B2 was used instead of B1.
[Ex 6]
   A fluororesin composition was obtained in the same manner as in Ex. 1 except that the amount of C1 was changed to 0.25 parts by mass.
[Ex 7]
   A fluororesin composition was obtained in the same manner as in Ex. 1 except that the amount of C1 was changed to 4 parts by mass.
[Ex. 8]
   A fluororesin composition was obtained in the same manner as in Ex. 1 except that the screw rotation speed in the melt-kneading extrusion was changed to 150 rpm.
[Ex. 9]
   A fluororesin composition was obtained in the same manner as in Ex. 1 except that the kneading temperature was changed to 230°C.
[Ex. 10]
   A fluororesin composition was obtained in the same manner as in Ex. 1 except that the melt-kneading extrusion was conducted by using an internal mixer (Labo Plastomill KF70V2, manufactured by Toyo Seiki Seisaku-sho, LTD., batch type).

In the fluororesin composition obtained in each Ex., the fluorinated elastomer was found to be dispersed in the fluororesin.

The storage modulus E' and the loss modulus E" of the fluororesin composition obtained in each Ex. are shown in Table 1. In the Table "ND" indicates that the result was the detection limit or less (100 kPa or less).

**TABLE 1**

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| A1 [parts by mass] | 50 | - | 50 | 50 | 50 | 50 | 50 | 50 | 50 | 50 |
| A2 [parts by mass] | - | 50 | - | - | - | - | - | - | - | - |
| B1 [parts by mass] | 50 | 50 | 50 | 50 | - | 50 | 50 | 50 | 50 | 50 |
| B2 [parts by mass] | - | - | - | - | 50 | - | - | - | - | - |
| C1 [parts by mass] | 1 | 1 | 1 | 1 | 1 | 0.25 | 4 | 1 | 1 | 1 |
| Screw rotation speed [rpm] | 250 | 250 | 250 | 250 | 250 | 250 | 250 | 150 | 250 | 250 |
| kneading temperature [°C] | 240 | 240 | 280 | 300 | 300 | 240 | 240 | 240 | 230 | 240 |
| Melting point of fluororesin composition [°C] | 225 | 225 | 225 | 225 | 225 | 225 | 225 | 225 | 225 | 225 |
| Storage modulus E' of fluororesin composition [kPa] | ND | ND | ND | ND | ND | ND | ND | 290 | 290 | 260 |
| Loss modulus E" of fluororesin composition [kPa] | ND | ND | ND | ND | ND | ND | ND | 340 | 290 | 190 |
| Evaluation of surface condition of molded product | A | - | - | - | - | - | - | B | - | - |

As shown in Table 1, the electric wire sample obtained by dynamic molding using the fluororesin composition obtained in Ex. 1 being a fluororesin composition of the present invention was excellent in surface smoothness. On the other hand, in the case of the fluororesin composition obtained in Ex. 8, the storage modulus E' of the fluororesin composition was high, and the electric wire sample obtained by dynamic molding using the fluororesin composition obtained in Ex. 8 had roughness formed on its surface and was inferior in surface smoothness.

### [Ex. 11]

### Fluororesin B3:

(1) A polymerization vessel having an internal volume of 430L and equipped with a stirrer, was degassed; 368.0 kg of CF₃CH₂O(CF₂)₂H, 4.1 kg of methanol and 0.43 kg of CH₂=CH(CF₂)₂F were charged; inside of the polymerization vessel was heated to 66°C; and the pressure was raised to 1.5 MPa/G with a mixed gas of TFE and ethylene (TFE/ethylene = 89/11 (molar ratio)). As a polymerization initiator, 1,993 g of a solution of 2% of tert-butyl peroxypivalate in CF₃CH₂O(CF₂)₂H was charged to initiate polymerization. During the polymerization, a monomer mixture gas of TFE and ethylene (TFE/ethylene = 59/41 (molar ratio)) was continuously charged so that the pressure became constant. Further, CH₂=CH(CF₂)₂F in an amount corresponding to 0.6 mol% and IAH in an amount of corresponding to 0.6 mol%, to the total number of moles of TFE and ethylene to be charged during the polymerization, was continuously charged. After 255 minutes from the initiation of polymerization and at the time when 22 kg of the monomer mixture gas was charged, the inside of the polymerization vessel was lowered to room temperature and purged to normal pressure.

The obtained slurry-like fluorinated copolymer (B3-1) was put into a granulation tank of 860L charged with 340 kg of water, followed by granulation by raising the temperature to 105°C with stirring to distil off the solvent. The obtained granules were dried at 150°C for 15 hours to obtain 24.8 kg of dried granules of the fluorinated copolymer (B3-1).

With respect to the fluorinated copolymer of (B3-1), from the results of the melt NMR analysis, the fluorine content analysis and the infrared absorption spectrum analysis, the fluorinated copolymer (B3-1) was found to have a ratio of TFE units/E units/CH₂=CH(CF₂)₂F units /IAH units being 56.1/42.7/0.5/0.7 (molar ratio).

Further, MFR of the fluorinated copolymer (B3-1) was 33.7 g/10 min. and its melting point was 256°C.
(2) A polymerization vessel having an internal volume of 430L and equipped with a stirrer, was degassed; 367.2 kg of CF₃CH₂O(CF₂)₂H, 4.4 kg of methanol and 0.65 kg of CH₂=CH(CF₂)₂F were charged; inside of the polymerization vessel was heated to 66°C; and the pressure was raised to 1.5 MPa/G with a mixed gas of TFE and ethylene (TFE/ethylene = 89/11 (molar ratio)). As a polymerization initiator, 154 g of a solution of 2% of tert-butyl peroxypivalate in CF₃CH₂O(CF₂)₂H was charged to initiate polymerization. During the polymerization, a monomer mixture gas of TFE and ethylene (TFE/ethylene = 59/41 (molar ratio)) was continuously charged so that the pressure became constant. Further, CH₂=CH(CF₂)₂F in an amount corresponding to 0.9 mol% to the total number of moles of TFE and ethylene to be charged during the polymerization was continuously charged. After 494 minutes from the initiation of polymerization and at the time when 22 kg of the monomer mixture gas was charged, the inside of the polymerization vessel was lowered to room temperature and purged to normal pressure.

The obtained slurry-like fluorinated copolymer (B3-2) was put into a granulation vessel of 860L charged with 340 kg of water, followed by granulation by raising the temperature to 105°C with stirring to distil off the solvent. The obtained granules were dried at 150°C for 15 hours to obtain 25.0 kg of dried granules of the fluorinated copolymer of (B3-2).

With respect to the fluorinated copolymer (B3-2), from the results of the melt NMR analysis, the fluorine content analysis and the infrared absorption spectrum analysis, the fluorinated copolymer (B3-2) was found to have a ratio of TFE units/E units/CH₂=CH(CF₂)₂F units being 57.5/41.7/0.8 (molar ratio).

Further, MFR of the fluorinated copolymer (B3-2) was 31.0 g/10 min. and its melting point was 258°C.
(3) 20 parts by mass of granules (B3-1) and 80 parts by mass of granules (B3-2) were dry-blended, and then melt-kneaded at a retention time of 2 minutes by using a twin-screw extruder, to prepare pellets of fluororesin B3.

### Polyamide 12: manufactured by Ube Industries, Ltd., product name: UBESTA3030JLX2A

Polyamide 12 was supplied to a cylinder for forming an outer layer, fluororesin B3 was supplied to a cylinder for forming an intermediate layer, and the fluororesin composition obtained in Ex. 1 was supplied to a cylinder for forming an inner layer, and they were transported to transport zones of the respective cylinders. The heating temperatures at the transport zones of polyamide 12, fluorine resin B3 and the fluororesin composition obtained in Ex. 1 were, respectively, set to be 230°C, 300°C and 300°C. By setting the temperature of a co-die to be 320°C, 3-layer co-extrusion was conducted, to obtain a three-layered laminate tube. This laminate tube had an outer diameter of 8 mm, an inner diameter of 6 mm and a thickness of 1 mm, and the thicknesses of the outer layer of polyamide 12, the intermediate layer of fluororesin B3 and the inner layer of the fluororesin composition obtained in Ex. 1, were, respectively, 0.75 mm, 0.15 mm and 0.1 mm. The inner layer and the intermediate layer, and the intermediate layer and the outer layer, were very firmly bonded and could not be peeled, and thus, the measurement of the peel strength was impossible.

The minimum bending radius of the obtained tube was measured and found to be 36 mm.

Polyamide 12 was supplied to a cylinder for forming an outer layer, and fluororesin B3 was supplied to a cylinder for forming an inner layer, and they were transported to transport zones of the respective cylinders. The heating temperatures at the transport zones of polyamide 12 and fluororesin B3 were set to be 230°C and 300°C, respectively. By setting the temperature of a co-die to be 320°C, 2 layer coextrusion was conducted, to obtain a two layered laminate tube. This laminate tube had an outer diameter of 8 mm, an inner diameter of 6 mm and a thickness of 1 mm, and the thicknesses of the outer layer of polyamide 12 and the inner layer of fluororesin B3 were, respectively, 0.8 mm and 0.2 mm. The inner layer and the outer layer were very firmly bonded and could not be peeled, and thus, the measurement of the peel strength was impossible.

The minimum bending radius of the obtained tube was measured and found to be 42.5 mm.

The laminate tube obtained by molding using the fluororesin composition obtained in Ex. 1 being a fluororesin composition of the present invention was excellent in bendability. On the other hand, the laminate tube without using a fluororesin composition of the present invention was inferior in bendability.

The entire disclosure of Japanese Patent Application No. 2016-048759 filed on March 11, 2016, Japanese Patent Application No. 2016-091850 filed on April 28, 2016 and Japanese Patent Application No. 2016-182183 filed on September 16, 2016 including specification, claims and summary is incorporated herein by reference in its entirety.

## Claims

1. A fluororesin composition made of a melt-kneaded product comprising a fluorinated elastomer having a storage shear modulus G' of at least 100, and a melt-moldable fluororesin having a melting point of at least 150°C, **characterized in that**
the fluorinated elastomer is dispersed in the fluororesin,
the content of the fluorinated elastomer to the total of the fluorinated elastomer and the fluororesin is from 10 to 65 mass%,
the total amount of the fluorinated elastomer and the fluororesin is at least 90 mass% to the fluororesin composition, and
the storage modulus E' of the fluororesin composition at a temperature higher by 25°C than the melting point of the fluororesin, is at most 250 kPa.

2. The fluororesin composition according to Claim 1, wherein the fluororesin composition is made of a melt-kneaded product comprising an ethylene copolymer derived from an ethylene copolymer having epoxy groups, the fluorinated elastomer and the fluororesin, and
the content of the ethylene copolymer is from 0.1 to 10 parts by mass to 100 parts by mass of the total of the fluorinated elastomer and the fluororesin.

3. The fluororesin composition according to Claim 1 or 2, wherein the fluorinated elastomer is a copolymer having units based on tetrafluoroethylene and units based on propylene.

4. The fluororesin composition according to any one of Claims 1 to 3, wherein the fluorinated elastomer is dispersed in the fluororesin by forming a sea-island structure or a co-continuous structure.

5. The fluororesin composition according to any one of Claims 1 to 4, wherein the fluororesin is a polymer having units based on tetrafluoroethylene, a polymer having units based on vinylidene fluoride, or a polymer having units based on chlorotrifluoroethylene.

6. The fluororesin composition according to Claim 5, wherein the fluororesin is a copolymer having units based on ethylene and units based on tetrafluoroethylene.

7. The fluororesin composition according to any one of Claims 1 to 6, wherein the melting point of the fluororesin is from 150 to 300°C.

8. A method for producing a fluororesin composition, which comprises melt-kneading a raw material comprising a fluorinated elastomer having a storage shear modulus G' of at least 100, a melt-moldable fluororesin having a melting point of at least 150°C and optionally an ethylene copolymer having epoxy groups, followed by cooling, **characterized in that**
in the raw material before the melt-kneading, the content of the fluorinated elastomer to the total of the fluorinated elastomer and the fluororesin is from 10 to 65 mass%, the total amount of the fluorinated elastomer and the fluororesin is at least 90 mass% to the fluororesin composition, and the content of the ethylene copolymer having epoxy groups is from 0 to 10 parts by mass to 100 parts by mass of the total of the fluorinated elastomer and the fluororesin, and
after the melt-kneading, the fluorinated elastomer is dispersed in the fluororesin, and the storage modulus E' of the obtained fluororesin composition at a temperature higher by 25°C than the melting point of the fluororesin, is at most 250 kPa.

9. The method for producing a fluororesin composition according to Claim 8, wherein the fluorinated elastomer is dispersed in the fluororesin so as to form a sea-island structure or a co-continuous structure.

10. A molding material comprising the fluororesin composition as defined in any one of Claims 1 to 7.

11. A molded product formed by melt-molding the molding material as defined in Claim 10.

12. A molded product made of a film, sheet, hose or tube of a single layer or multilayer structure, wherein at least one layer among layers in such a molded product is a layer formed by melt-molding the molding material as defined in Claim 10.

13. A covered electric wire comprising a conductor and a covering material, wherein the covering material is a covering material formed by melt-molding the molding material as defined in Claim 10.
